# FASCICULE DE BREVET EUROPEEN

(11) **EP 3 997 557 B1**
(45) Date de publication et mention de la délivrance du brevet: **28.08.2024**
(21) Numéro de dépôt: 20736377.1
(22) Date de dépôt: 09.07.2020
(51) Int. Cl.: G06F 3/0354, G06F 3/044, B60K 35/00, B60K 35/10, B60N 2/75, B64D 11/00

(54) **INTERFACE TACTILE RÉTRACTABLE**
ZURÜCKZIEHBARE TAKTILE SCHNITTSTELLE
RETRACTABLE TACTILE INTERFACE

(30) Priorité: 09.07.2019 FR 1907682
(43) Date de publication de la demande: 18.05.2022
(73) Titulaire: Safran Electronics & Defense, 75015 Paris (FR)
(72) Inventeur: THORPE, Thomas, 93100 MONTREUIL (FR)
(74) Mandataire: Casalonga
(86) Numéro de dépôt international: PCT/EP2020/069404
(87) Numéro de publication internationale: WO 2021/005166

(56) Documents cités:
- EP-A1- 3 147 761
- DE-A1- 102008 053 734
- FR-A1- 3 070 916
- US-A1- 2007 138 822
- US-A1- 2008 266 265
- US-A1- 2017 010 675
- US-A1- 2019 184 877

## Description

### Domaine technique

La présente invention concerne, de manière générale, les interfaces de commande tactiles, et concerne plus particulièrement les interfaces de commande tactiles destinées à être embarquées à bord d'aéronefs et à être manipulées pour la mise en oeuvre de fonctions avioniques ou, de manière générale, commander ou contrôler le fonctionnement d'équipements embarqués.

Toutefois, l'invention s'applique également à tout autre domaine dans lequel les interfaces tactiles sont utilisées dans un environnement soumis à des vibrations ou, de manière générale, à des perturbations susceptibles de gêner l'utilisateur et d'augmenter les risques d'erreurs de manipulation.

### Techniques antérieures

En premier lieu, quel que soit le type d'interface, même lorsqu'il s'agit d'actionner un bouton de commande, la main de l'utilisateur peut être sujette à des tremblements, ou à des erreurs d'appréciation de la position de la zone à actionner. L'ergonomie des interfaces constitue donc l'une des préoccupations majeures des concepteurs des interfaces pour aéronefs.

Ces problèmes d'ergonomie se posent de façon accrue lorsqu'il s'agit de réaliser des tâches relativement longues dans un environnement soumis à des vibrations ou à des perturbations, de sorte que, la fatigue aidant, l'opérateur éprouve, à la longue, des difficultés à positionner parfaitement ses doigts sur une zone de l'interface à manipuler.

Ces problèmes d'ergonomie se posent également de façon accrue lorsque l'interface est une surface tactile permettant de piloter le déplacement d'un pointeur sur un écran ainsi que la sélection d'une zone de commande de l'afficheur.

La résolution des problèmes d'ergonomie implique la prise en compte des contraintes d'espace disponible pour la mise en place des interfaces de commande tactile.

Tel est en particulier le cas dans les cockpits d'aéronefs qui sont équipés d'un très grand nombre d'interfaces de diverses natures et dans lesquels il est difficile d'implanter des interfaces dans des emplacements disponibles. Les documents US 2019/184877 A1 et FR 3 070 916 A1 divulguent des interfaces tactiles rétractables.

### Exposé de l'invention

Le but de l'invention est et donc de pallier les diverses inconvénients précités et de permettre une implantation d'une interface de commande tactile qui soit ergonomique et qui soit aisément accessible.

Au vu de ce qui précède, l'invention a pour objet une interface tactile comprenant un pavé tactile et un support, le pavé tactile étant fixé de manière articulée sur le support entre une position active déployée et une position inactive escamotée dans laquelle le pavé est rabattu vers le support.

Le support constitue un tiroir mobile dans un boîtier entre une position sortie dans laquelle l'interface est en position active et une position rentrée dans laquelle interface est en position escamotée.

Le pavé comprend une articulation comprenant un axe d'articulation transversal par rapport à la direction de déplacement du tiroir.

Dans un mode de réalisation, l'interface comporte un pavé de commande à touches, disposé en amont du pavé tactile, en considérant le sens de déplacement du tiroir.

L'interface peut comporter des moyens libérables de blocage du pavé tactile en position déployée.

Elle peut en outre comporter au moins un organe de déverrouillage des moyens de blocage du pavé.

L'interface est dotée d'une surface d'appui pour la main de l'utilisateur, ladite surface d'appui étant fixée de manière articulée par rapport au pavé tactile.

Dans un mode de réalisation, la surface d'appui comprend une articulation antérieure par laquelle ladite surface d'appui est articulée sur le pavé tactile et une extrémité postérieure coulissante par rapport au support.

De préférence, la surface d'appui comporte un capteur de détection de la main d'un utilisateur.

Dans un mode de réalisation avantageux, le pavé tactile comporte une surface d'appui tactile à profil extérieur convexe.

Selon une caractéristique de l'interface, le pavé tactile comprend deux réseaux de pistes électriquement conductrices séparés et isolés électriquement par un substrat comprenant une coque creuse à profil extérieur convexe et électriquement isolante, les réseaux de pistes étant disposés respectivement intérieurement et extérieur.

L'invention a également pour objet un siège de cockpit d'aéronef, caractérisé en ce qu'il telle que définie ci-dessus, montée dans au moins l'un des accoudoirs du siège.

### Brève description des dessins

L'invention sera mieux comprise à l'étude détaillée de quelques modes de réalisation pris à titre d'exemples non limitatifs et illustrés par les dessins annexés, sur lesquels :
[Fig 1]
   et
[Fig 2] représentent une vue en perspective d'une interface de commande tactile conforme à l'invention, respectivement en position active déployée et en position inactive escamotée ;
[Fig 3] est un schéma synoptique de profil de l'interface tactile de la figure 1 ;
[Fig 4] illustre l'interface de commande tactile selon l'invention, lors de son utilisation ;
[Fig 5] représente les réseaux de pistes électriques du pavé tactile ; et
[Fig 6] illustre un siège de cockpit d'aéronef doté d'une interface tactile rétractable conforme à l'invention, en position rétractée.

### Description détaillée

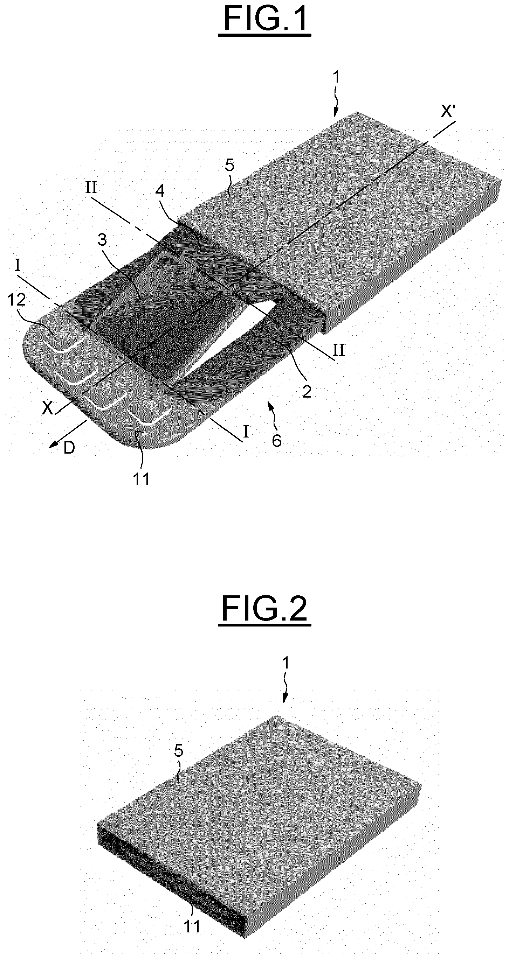

Sur les figures 1 et 2, on a représenté une interface de commande tactile selon l'invention, désigné par la référence numérique générale 1.

Cette interface tactile 1 est notamment destinée à être montée dans un aéronef, dans le cockpit, et constitue un dispositif de pointage, de type souris ou « pad », pour commander le déplacement d'un pointeur sur un écran, et le cas échéant, activer une fonction avionique.

Elle est en particulier destinée à être implantée dans le siège d'un personnel navigant technique ou PNT, par exemple dans l'accoudoir d'un siège du cockpit, et est susceptible d'adopter une configuration entièrement déployée, visible sur la figure 1, et une position entièrement rétractée dans l'accoudoir (figure 2).

L'interface 1 comporte un support 2, un pavé tactile 3 articulé sur le support, une surface d'appui 4 articulée sur le pavé tactile 3 et un boîtier fixe 5 qui est destiné à être fixé dans l'accoudoir.

L'ensemble constitué par le support 2, le pavé tactile 3 et la surface d'appui 4 constitue un tiroir mobile 6 monté de manière coulissante dans le boîtier 5 entre une position active déployée, dans laquelle le tiroir mobile 6 s'étend en dehors du boîtier et une position inactive escamotée dans laquelle le tiroir mobile 6 est entièrement logé dans le boîtier 5, en prévoyant par exemple dans le support et dans le boîtier un mécanisme à glissière, un mécanisme à crémaillère, ou tout autre mécanisme équivalent.

L'axe d'articulation I-I du pavé tactile 3 par rapport au support et l'axe d'articulation II-II de la surface d'appui 4 par rapport au pavé tactile 3 s'étendent chacun perpendiculairement à la direction X-X' de déplacement du tiroir mobile 6.

Le pavé tactile 3 et la surface d'appui 4 ont chacun une forme rectangulaire ou carrée.

En considérant la direction D de déplacement du tiroir mobile dans le sens de l'ouverture, l'axe d'articulation I-I du pavé tactile est situé le long du côté antérieur 7 du pavé tactile, et l'axe d'articulation II-II de la surface d'appui 4 est situé le long du côté postérieur 8 du pavé tactile 3 et le long du côté antérieur 9 de la surface d'appui 4.

Le côté postérieur 10 de la surface d'appui 4 est quant à lui monté de manière coulissante sur le support 2, par exemple au moyen d'un mécanisme à glissière et à coulisse, d'un mécanisme à crémaillère ou de tout autre dispositif équivalent.

Bien entendu, selon les configurations souhaitées, le côté postérieur 10 de la surface d'appui peut également être doté d'une articulation par rapport au support 2 et le côté antérieur 7 du pavé tactile peut être monté de manière coulissante par rapport au support.

Toutefois, de préférence, le côté antérieur 7 du pavé tactile est articulé par rapport au support 2, tandis que le côté postérieur 10 de la surface d'appui est monté de manière coulissante. Toutefois, le mécanisme assurant le montage coulissant du côté postérieur de la surface d'appui 4 peut être doté d'une articulation par rapport au support afin de permettre une modification de l'angle formé entre la surface d'appui et le support lors du déplacement du tiroir mobile. De même, le côté antérieur du pavé tactile articulé par rapport au support peut être monté de manière coulissante par rapport au support.

Avantageusement, tel que représenté, du côté antérieur, le support de peut être doté d'un pavé de commande 11 à boutons de commande 12 actionnables manuellement pour acquitter une sélection faite au moyen du pavé tactile.

Dans l'exemple illustré, le support est doté d'un pavé de commande comprenant quatre touches de commande. Bien entendu, le nombre de touches de commande 12 est purement illustratif.

L'interface tactile 1 est complétée par des moyens libérables 13 de blocage du pavé tactile 3 en position déployée. Tel que représenté, ces moyens 13 agissent sur le côté latéral postérieur de la surface d'appui 4 de manière à bloquer le mouvement de coulissement de cette extrémité postérieure. Il peut s'agir de tout moyen de verrouillage approprié. Par exemple, il peut s'agir d'un pion qui s'insère dans une lumière prévue latéralement dans la surface d'appui 4, d'une lumière pratiquée dans le support, dans laquelle s'engage un axe porté par le côté postérieur de la surface d'appui 4, d'un frein, d'un organe de blocage du mécanisme à crémaillère,...

Des moyens libérables 14 de blocage du tiroir mobile 6 sont également prévues pour bloquer le tiroir 6 en position déployée. Il s'agit par exemple de moyens similaires au moyen 13 décrit précédemment, par exemple, un pion porté par le boîtier 5 qui s'insère dans une lumière pratiquée sur le support 2, d'une lumière pratiquée dans le boîtier 5 dans laquelle s'engage un axe porté par le support 2, d'un frein, ou d'un organe de blocage du mécanisme à crémaillère.

Enfin, un organe 15 de déverrouillage des moyens libérables 13 et 14 est prévu pour déverrouiller, d'une part, le pavé tactile 3 et, d'autre part, le tiroir mobile 6.

Il peut s'agir d'un unique bouton agissant simultanément sur les deux moyens de blocage 13 et 14 ou de deux boutons spécifiques agissant respectivement sur le moyen de blocage du pavé tactile 3 et sur le moyen de blocage 14 du tiroir mobile 6.

Comme indiqué précédemment, le pavé tactile 3 et la surface d'appui 4 sont montés sur le support de manière à adopter une position active déployée visible sur la figure 1, et une position inactive escamotée dans laquelle le pavé 3 et la surface d'appui 4 sont en appui contre un logement prévu à cet effet dans le support :
En position active déployée, l'angle formé par le pavé tactile 3 et par exemple de l'ordre de 20°.

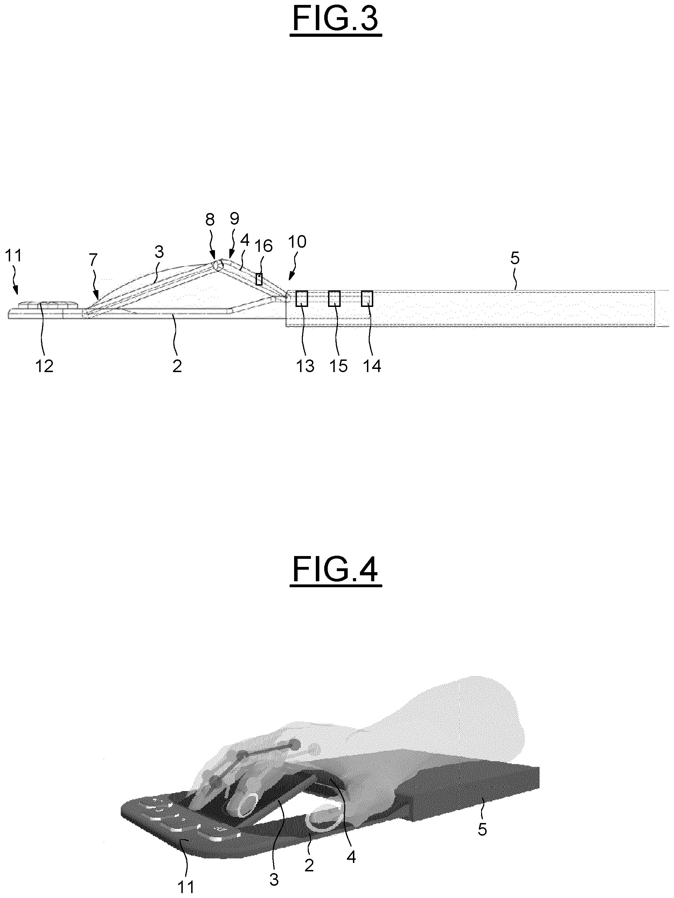

En référence à la figure 4, en position active déployée, la surface d'appui 4 est destinée à recevoir la paume de la main d'un utilisateur, en position anatomique de la main.

Dans cette position, les doigts reposent sur le pavé tactile et les touches de commande 11 sont également accessibles sans effort.

Avantageusement, la surface tactile 4 est dotée d'un capteur 16 apte à détecter la main de l'utilisateur et activer le pavé tactile 3, celui-ci étant inactif tant que la main de l'utilisateur n'a pas été détectée.

Tel que représenté, le pavé tactile 3 comporte avantageusement une surface active à profil extérieur convexe ayant plusieurs directions de courbure, de préférence à convexité semi sphérique et constitue un pad particulièrement ergonomique pour l'utilisateur, notamment pour une utilisation d'une seule main.

La surface tactile du pad constitue une surface tactile capacitive.

Elle comporte par exemple au moins deux réseaux de pistes électriquement conductrices, formées par exemple de filaments de cuivre séparé par un substrat.

Ces pistes forment un réseau de conducteurs électriquement chargé apte à détecter l'appui d'un ou de plusieurs doigts d'un opérateur résultant d'un transfert de charges engendrés par cet appui.

Les pistes électriques intérieure 17 et extérieure 18 peuvent comporter un substrat 19 de circuit imprimé flexible de type « PCB » (pour « Printed Circuit Board ») en polyamides.

Le substrat 19 est constitué d'un matériau rigide comportant du plastique, du verre ou de la résine époxy. Il est réalisé par moulage, par fabrication additive ou par usinage.

Le substrat 19 constitue une coque creuse de forme externe convexe, de forme identique ou similaire de celle de la surface tactile, et constituée d'un matériau électriquement isolant.

Notamment, la coque comporte essentiellement une partie semi-sphérique. La forme semi-sphérique de la coque et de la surface tactile du pad permet à la surface tactile d'être atteinte par tous les doigts d'une main reposant par le poignet sur le pad sans mouvement du poignet, assurant ainsi un meilleur contrôle des mouvements de commande réalisés par l'utilisateur. Une forme semi-sphérique est aussi avantageuse en termes de compacité, l'étalement du pad étant réduit pour une même quantité de points de commande sur la surface tactile.

Les deux réseaux 17, 18 sont disposés intérieurement et extérieurement sur la coque convexe. Ainsi, les réseaux 17, 18 sont séparés et isolés électriquement par le substrat 19.

Les pistes intérieure 17 et extérieure 18 forment des matrices ou réseaux conducteurs, c'est-à-dire des alignements disjoints généralement parallèles de cheminements électriques. En outre, les pistes intérieure 17 et extérieure 18 traversent régulièrement le substrat 19 et se chevauchent mutuellement en une pluralité de points de chevauchement 20.

Par exemple, la piste intérieure 17 passe au travers de passages prévus dans le substrat, un filament traversant la coque et chevauchant la piste électrique extérieure 18 sans contact électrique avec celle-ci.

On forme ainsi une surface capacitive tactile autour du substrat 19 servant de diélectrique et épousant la forme courbe du substrat 19.

Les pistes 17, 18 peuvent chacune comporter des filaments qui sont en outre tressés sans contact l'un avec l'autre. Les filaments coopèrent ainsi pour assurer une liaison mécanique et électrique, formant une nappe tactile du pad.

En outre, les matrices intérieure et extérieure peuvent comporter chacune plusieurs pistes électriques, de manière à réaliser une interface tactile multi-points, c'est-à-dire pouvant être contrôlée simultanément par plusieurs doigts ou stylets de commande depuis la même surface tactile.

L'interface 1 comporte par ailleurs des moyens de mesure de variables électriques des pistes électriques intérieure 17 et extérieure 18 et peut comprendre plusieurs éléments de mesure.

De préférence, l'interface comporte au moins autant d'éléments de mesure que de pistes électriques à analyser pour déterminer l'emplacement d'un doigt ou stylet de contrôle sur la surface tactile.

Plusieurs pistes peuvent être prévues pour un même substrat 19 utilisé dans la surface tactile. En particulier, différents modes de réalisation de matrices intérieure et extérieure et de leurs chevauchements 20 tels que décrits précédemment peuvent être combinés pour réaliser un une coque convexe.

Ces pistes forment un réseau de conducteurs électriquement chargés aptes à détecter l'appui d'un ou de plusieurs doigts d'un opérateur résultant d'un transfert de charges engendré par cet appui.

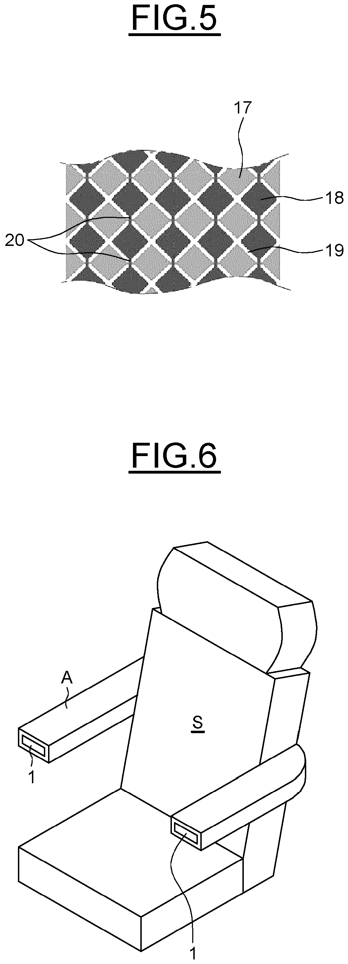

En se référant enfin à la figure 6, comme indiqué précédemment, l'interface tactile peut avantageusement être intégrée dans l'accoudoir d'un siège S d'un cockpit d'avion.

## Revendications

1. Interface tactile (1), comprenant un pavé tactile (3) et un support (2), le pavé tactile étant fixé de manière articulée sur le support (2) entre une position active déployée et une position inactive escamotée dans laquelle le pavé est rabattu vers le support, dans laquelle le support (2) constitue un tiroir (6) mobile dans un boîtier (5) entre une position sortie dans laquelle l'interface est en position active et une position rentrée dans laquelle l'interface est en position escamotée, le pavé (3) comprend une articulation comprenant un axe d'articulation (I-I) transversal par rapport à la direction (D) de déplacement du tiroir, **caractérisée en ce qu'**elle comprend une surface (4) d'appui pour la main de l'utilisateur, ladite surface d'appui étant fixée de manière articulée par rapport au pavé tactile (3).

2. Interface tactile (1) selon la revendication 1, comportant un pavé de commande (11) à touches, disposé en amont du pavé tactile, en considérant le sens de déplacement du tiroir.

3. Interface tactile (1) selon l'une des revendications 1 et 2, comprenant des moyens (13) libérables de blocage du pavé tactile (3) en position déployée.

4. Interface tactile (1) selon la revendication 3, comprenant au moins un organe (15) de déverrouillage des moyens de blocage du pavé tactile (3).

5. Interface tactile (1) selon l'une quelconque des revendications 1 à 4, dans laquelle la surface d'appui comprend une articulation antérieure (II-II) par laquelle ladite surface d'appui est articulée sur le pavé tactile (3) et une extrémité postérieure (10) coulissante par rapport au support.

6. Interface tactile selon la revendication 5, dans laquelle la surface d'appui comporte un capteur (16) de détection de la main d'un utilisateur.

7. Interface tactile (1) selon l'une quelconque des revendications 1 à 6, dans laquelle le pavé tactile (3) comporte une surface d'appui tactile à profil extérieur convexe.

8. Interface tactile (1) selon la revendication 7, dans laquelle le pavé tactile comprend deux réseaux (17, 18) de pistes électriquement conductrices séparés et isolés électriquement par un substrat (19) comprenant une coque creuse à profil extérieur convexe et électriquement isolante, les réseaux de pistes étant disposés respectivement intérieurement et extérieur.

9. Siège de cockpit d'aéronef, comportant une interface tactile (1) selon l'une quelconque des revendications 1 à 8, montée dans au moins l'un des accoudoirs du siège.

## Patentansprüche

1. Taktile Schnittstelle (1), ein taktiles Pad (3) und eine Halterung (2) umfassend, wobei das taktile Pad gelenkig an der Halterung (2) befestigt ist zwischen einer ausgefahrenen aktiven Stellung und einer eingefahrenen inaktiven Stellung, in der das Pad zur Halterung zurückgeklappt ist, wobei die Halterung (2) einen beweglichen Einschub (6) in einem Gehäuse (5) bildet zwischen einer ausgezogenen Stellung, in der sich die Schnittstelle in der aktiven Stellung befindet, und einer eingezogenen Stellung, in der sich die Schnittstelle in der eingefahrenen Stellung befindet, wobei das Pad (3) ein Gelenk umfasst, das eine Gelenkachse (I-I) umfasst, die in Bezug auf die Bewegungsrichtung (D) des Einschubs quer verläuft, **dadurch gekennzeichnet, dass** sie eine Auflagefläche (4) für die Hand des Benutzers umfasst, wobei die Auflagefläche in Bezug auf das taktile Pad (3) gelenkig befestigt ist.

2. Taktile Schnittstelle (1) nach Anspruch 1, ein Tastenbedienungs-Pad (11) enthaltend, das vor dem taktilen Pad angeordnet ist, unter Berücksichtigung der Bewegungsrichtung des Einschubs.

3. Taktile Schnittstelle (1) nach einem der Ansprüche 1 und 2, lösbare Mittel (13) zum Blockieren des taktilen Pads (3) in ausgefahrener Stellung umfassend.

4. Taktile Schnittstelle (1) nach Anspruch 3, mindestens ein Element (15) der Entriegelung der Mittel zum Blockieren des taktilen Pads (3) umfassend.

5. Taktile Schnittstelle (1) nach einem der Ansprüche 1 bis 4, wobei die Auflagefläche ein vorderes Gelenk (II-II) umfasst, durch das die Auflagefläche am taktilen Pad (3) gelenkig ist, und ein hinteres Ende (10), das sich in Bezug auf die Halterung verschiebt.

6. Taktile Schnittstelle nach Anspruch 5, wobei die Auflagefläche einen Sensor (16) zum Erfassen der Hand eines Benutzers enthält.

7. Taktile Schnittstelle (1) nach einem der Ansprüche 1 bis 6, wobei das taktile Pad (3) eine taktile Auflagefläche mit einem konvexen Außenprofil enthält.

8. Taktile Schnittstelle (1) nach Anspruch 7, wobei das taktile Pad zwei Netze (17, 18) mit elektrisch leitenden Bahnen umfasst, die getrennt und elektrisch isoliert sind durch ein Substrat (19), das eine gebauchte Schale mit einem konvexen und elektrisch isolierenden Außenprofil umfasst, wobei die Bahnnetze innen beziehungsweise außen angeordnet sind.

9. Sitz eines Flugzeugcockpits, eine taktile Schnittstelle (1) nach einem der Ansprüche 1 bis 8 enthaltend, die in mindestens einer der Armlehnen des Sitzes montiert ist.

## Claims

1. A touch interface (1), comprising a touch pad (3) and a support (2), the touch pad being hingedly fastened on the support (2) between a deployed active position and a retracted inactive position in which the pad is folded back towards the support, wherein the support (2) constitutes a drawer (6) which is movable in a housing (5) between an extended position in which the interface is in the active position and a retracted position in which the interface is in retracted position, the pad (3) comprises a hinge comprising an hinge axis (I-I) transverse relative to the direction (D) of displacement of the drawer, **characterised in that** it comprises a bearing surface (4) for the user's hand, said bearing surface being hingedly fastened relative to the touch pad (3).

2. The touch interface (1) according to claim 1, including a control pad (11) with keys, disposed upstream of the touch pad, considering the direction of displacement of the drawer.

3. The touch interface (1) according to one of claims 1 and 2, comprising releasable means (13) for blocking the touch pad (3) in the deployed position.

4. The touch interface (1) according to claim 3, comprising at least one member (15) for unlocking the means for blocking the touch pad (3).

5. The touch interface (1) according to any one of claims 1 to 4, wherein the bearing surface comprises a front hinge (II-II) by which said bearing surface is hinged on the touch pad (3) and a rear end (10) sliding relative to the support.

6. The touch interface according to claim 5, wherein the bearing surface includes a sensor (16) for detecting the hand of a user.

7. The touch interface (1) according to any one of claims 1 to 6, wherein the touch pad (3) includes a touch bearing surface with a convex exterior profile.

8. The touch interface (1) according to claim 7, wherein the touch pad comprises two electrically conductive track networks (17, 18) which are separated and electrically insulated by a substrate (19) comprising a hollow shell with a convex exterior profile and which is electrically insulating, the track networks being disposed respectively internally and externally.

9. An aircraft cockpit seat, including a touch interface (1) according to any one of claims 1 to 8, which is mounted in at least one of the armrests of the seat.
